Europäisches Patentamt

European Patent Office

Office européen des brevets

(19)

(11) Publication number: **0 004 767**
**B1**

(12) **EUROPEAN PATENT SPECIFICATION**

(45) Date of publication of patent specification: **09.12.81**

(51) Int. Cl.³: **C 01 B 21/083**

(21) Application number: **79300543.0**

(22) Date of filing: **03.04.79**

(54) **Removal of dinitrogen difluoride from atmospheres containing nitrogen trifluoride.**

(30) Priority: **06.04.78 US 894114**

(43) Date of publication of application:
**17.10.79 Bulletin 79/21**

(45) Publication of the grant of the European patent:
**09.12.81 Bulletin 81/49**

(84) Designated Contracting States:
**BE DE FR GB IT NL**

(56) References cited:
**US - A - 3 032 400**
**US - A - 3 109 711**
**US - A - 3 181 305**
**US - A - 3 214 237**
**US - A - 3 356 454**
**US - A - 3 361 536**
**US - A - 4 091 081**

(73) Proprietor: **AIR PRODUCTS AND CHEMICALS, INC.**
**P.O. Box 538**
**Allentown, Pennsylvania 18105 (US)**

(72) Inventor: **Lileck, John Theodore**
**39 Greenwood Street**
**Tamaqua Pennsylvania 18252 (US)**
Inventor: **Papinsick, John**
**9 North Street**
**Summit Hill Pennsylvania 18250 (US)**
Inventor: **Steigerwalt, Edward James**
**R.D. no. 4, Box 327**
**Lehighton Pennsylvania 18235 (US)**

(74) Representative: **Lucas, Brian Ronald**
**c/o Air Products Limited Coombe House St.**
**George's Square**
**New Malden, Surrey (GB)**

Courier Press, Leamington Spa, England.

# 0 004 767

Removal of dinitrogen difluoride from atmospheres containing nitrogen trifluoride

This invention relates to a process for removing dinitrogen difluoride from an atmosphere containing nitrogen trifluoride.

In the mid 1960's processes for manufacturing nitrogen trifluoride were developed with the nitrogen trifluoride being used primarily for the synthesis of high energy liquid and solid propellants. In recent years the uses of nitrogen trifluoride have changed and now the nitrogen trifluoride, because of its stability under pressure, is being used as a fluorine source for the synthesis of fluorocarbons or as an oxidizer in lasers.

Nitrogen trifluoride can be prepared by several processes, these processes being described in U.S. Patents US—A—3,304,248; US—A—3,181,305; and US—A—3,214,237. The earlier processes used for the preparation of nitrogen trifluoride involved the electrolysis of ammonium bifluoride. In that process ammonia and hydrogen fluoride were introduced into a molten bath of ammonium bifluoride and an electric current was applied to generate nitrogen trifluoride.

Another process for producing nitrogen trifluoride involved the fluorination of ammonia in the presence of a copper catalyst at temperatures from about 0—50°C,

Another process involved the fluorination of nitrogen and there nitrogen and fluorine were passed through a plasma arc at a temperature of at least 1,000°C.

Basic to each of these processes is the production of other nitrogen fluorides particularly dinitrogen difluoride (also known as difluorodiazine) which must be removed. However, as the art has recognised, difluorodiazine is difficult to remove from a nitrogen trifluoride containing atmosphere. (See US—A—3,109,711.)

The basic processes employed in removing dinitrogen difluoride from nitrogen trifluoride atmospheres, particularly in the off-gases from the nitrogen trifluoride synthesis reactor have involved adsorption of the dinitrogen difluoride or cryogenic separation and fractionation. US—A—3,356,454 shows removing difluorodiazine from nitrogen trifluoride containing atmospheres by the use of adsorption equipment filled with an adsorbent material such as silica gel and synthetic zeolite. Temperatures associated with adsorption were about 0°C.

US—A—3,181,305 discloses a process for separating tetrafluorohydrazine and nitrous oxide from a nitrogen trifluoride containing atmosphere by cooling the atmosphere to a temperature sufficient to solidify the nitrous oxide, filtering the nitrous oxide from the system, and then cooling to a temperature of −160°C and separating the liquid nitrogen trifluoride from the immiscible liquid tetrafluorohydrazine.

US—A—3,214,237 which discloses a process for producing nitrogen trifluoride shows the use of a fractionation procedure for removing dinitrogen difluoride. In this patent the reactor gases are passed through a series of cold taps maintained at −196°C to produce condensates of nitrogen trifluoride and other nitrogen trifluorides such as dinitrogen tetrafluoride and dinitrogen difluoride. These nitrogen fluorides are separated by fractional vaporization or distillation.

The two major disadvantages of separating dinitrogen difluoride from a nitrogen trifluoride containing atmosphere by the prior art techniques are as follows:

(1) The adsorption often is not selective to dinitrogen difluoride, but also can adsorb a significant quantity of nitrogen trifluoride, particularly at low temperatures. This nitrogen trifluoride is lost on regeneration of the adsorbers, and

(2) fractional distillation of the nitrogen trifluoride atmosphere inherently results in concentrating difluorodiazine, and when it is in concentrated form, difficulties in handling can exist as the product exhibits a tendency to decompose.

According to the present invention there is provided a process for removing dinitrogen difluoride from an atmosphere containing nitrogen trifluoride wherein the dinitrogen difluoride is present in an amount not exceeding 5% by volume, which process is characterized in that it comprises bringing said atmosphere into contact with a metal capable of defluorinating said dinitrogen difluoride but inert (as herein defined) to said nitrogen trifluoride and maintaining said metal and said atmosphere in contact at a sufficient temperature and for a sufficient reaction time to effect at least partial defluorination of said dinitrogen difluoride.

By inert it is meant that not more than 3.5 grams nitrogen trifluoride will react with 100 grams metal spheres of 3.2 mm (1/8 inch) diameter when at a temperature of 260°C (500°F), and atmospheric pressure in a 100 second time period.

When operating under favourable conditions at least preferred embodiments of processes in accordance with the present invention have:—

(1) the ability to selectively remove dinitrogen difluoride from an atmosphere containing nitrogen trifluoride without significant loss of nitrogen trifluoride;

(2) the ability to remove dinitrogen difluoride to extremely low levels, for example 0.1%, and typically less than 0.01% by volume; and

(3) the ability to avoid high concentrations of unstable dinitrogen difluoride and thus reduce the hazards associated with its handling.

2

# 0 004 767

Preferably, the temperature is maintained between 149°C (300°F) and 538°C (1,000°F) and more preferably between 204°C (400°F) and 371°C (700°F). Although the minimum temperature that can be used is that which is sufficient to effect decomposition of the dinitrogen difluoride, temperatures much below 149°C (300°F) require longer reaction times to effect defluorination of the dinitrogen difluoride, and often at such longer reaction times there is a greater loss of nitrogen trifluoride.

Advantageously the reaction time is between 1 and 1,000 seconds although under particularly suitable conditions, for example when using nickel as the metal, a reaction time of between 3 and 10 seconds may be used to reduce the level of dinitrogen difluoride from 1 to 2% to 0.05% or lower. Generally, the reaction time is inversely proportional to the reaction temperature, thus longer reaction times require the lower temperatures and shorter reaction times require higher temperatures. However, since the defluorination of dinitrogen difluoride is exothermic and nitrogen trifluoride can be decomposed by heat, a balance must be struck between the reaction time and the ability to remove heat from the reaction time and the ability to remove heat from the reaction area. We have found that the reaction time should be adjusted to maintain nitrogen trifluoride decomposition to less than 2%. Thus, when operating in a range from 204°C (400°F) to 371°C (700°F), the atmosphere typically is maintained in the reaction zone for a period of from 3 to 10 seconds. With nickel balls of about 3.2 mm (1/8 inch) in diameter, or nickel sheets, selective defluorination of dinitrogen difluoride can be consistently obtained to less than 0.05% by volume with less than 1% of the nitrogen trifluoride present being decomposed.

Advantageously, the metal is selected from the group consisting of nickel, cobalt and iron. In addition, the metal can be in alloy form, as in Monel metal and stainless steel. A small proportion of elemental metal which may be reactive with nitrogen trifluoride, for example copper, may be included in an alloy even though the elemental metal per se is not inert to nitrogen trifluoride provided that the alloy as a whole is inert by the above standard. Generally, the metal used in the process comprises stainless steel, carbon steel, copper, aluminium, zinc, lead, nickel, iron, cobalt or alloys thereof with nickel being the preferred metal.

The metals provide a surface which can selectively defluorinate the dinitrogen difluoride, presumably to nitrogen. Hence, significant quantities of metal fluorides are formed as the atmosphere is passed through the reaction zones. Preferably, the metal is in the form of a strip which advantageously is perforate. When strips are used they are preferably thin and, when viewed in plan, provided with sides which are between 0.4 mm (1/64 inch) and 51 mm (2 inches) long. We have found thin perforate strips which, when viewed in plan have sides between 3.2 mm (1/8 inch) and 12.7 mm (1/2 inch) long particularly suitable.

In the reaction zone, it is believed that the metal does two things; one it provides a surface which can react with the dinitrogen difluoride to selectively defluorinate that compound and produce a metal fluoride and free nitrogen; and two it acts as a heat sink thereby dissipating heat to inhibit thermal decomposition of nitrogen trifluoride.

The present invention is particularly suitable for purifying atmospheres containing at least 10% nitrogen trifluoride and preferably at least 15% by volume nitrogen trifluoride and more preferably at least 20% nitrogen trifluoride. For reasons which we do not fully understand the process appears to be limited to atmospheres containing less than 5% by volume dinitrogen difluoride. Above this level commercially unacceptable losses of nitrogen trifluoride seem to occur. In practice, most atmospheres generated during the production of nitrogen trifluoride contain far less than 5% dinitrogen difluoride. Thus, in the preferred embodiment of the process described by U.S. Patent Specification 4,091,081 the gas leaving the nitrogen trifluoride reactor contains:

| | |
|---|---|
| Nitrogen Trifluoride | 15—25% |
| Dinitrogen Difluoride | 0.5—2% |
| Nitrous Oxide | 0—2% |
| Nitrogen | balance e.g. 65—85% |
| Fluorine | 0.25—2.5% |
| HF (calculated) | 1—10% |

Except for the dinitrogen difluoride the other contaminants can be removed by various scrubbing or condensation techniques.

The following examples are provided to illustrate preferred embodiments of the invention and are not intended to restrict the scope thereof. All gas compositions are stated in volume percent.

Example 1

A reactor which comprised a two-inch diameter, schedule 40 nickel pipe, 660 mm (26 inches) in

3

# 0 004 767

length was fitted with a perforated plate at the bottom and filled to a height of 610 mm (24 inches) with about a 50—50 combination by volume of 3.2 mm (1/8 inch) spherical nickel balls and nickel protuded (i.e. perforate) packing, the protuded packing being about 1.3 mm (0.05 inch) thickness and, in plan, square having sides about 6.1 mm (0.24 inches) long. Electrical heating strips were attached to the outside wall of the reactor and coupled to a temperature indicator/controller for maintaining the appropriate temperature.

Nitrogen trifluoride process gas obtained by the direct fluorination of ammonia in the presence of ammonium bifluoride and having the following concentration:

| | |
|---|---|
| Nitrogen Trifluoride | 20.5% |
| Dinitrogen Difluoride | 0.57% |
| Helium (from $NF_3$ process) | 55.05% |
| Nitrogen | 24.4% |
| Carbon Tetrafluoride | 0.02% |

was passed through the reactor at a rate of 0.2 $sm^3h$ (4.8 scfh) to give a residence time of about 37 seconds. As the gas was passed through the reactor, the temperature was increased. The gases obtained from the reactor were analyzed for nitrogen trifluoride and dinitrogen difluoride content. Table I below indicates the concentration of nitrogen trifluoride and dinitrogen difluoride at the following reaction temperatures.

| Temp. °C | °F | $\%NF_3$ | $\%N_2F_2$ | $\%NF_3/\%N_2F_2$ |
|---|---|---|---|---|
| 79 | 175 | 19.4 | 0.52 | 37.31 |
| 82 | 180 | 21.2 | 0.447 | 47.43 |
| 83 | 182 | 19.54 | 0.43 | 45.55 |
| 106 | 223 | 22.5 | 0.607 | 37.07 |
| 190 | 376 | 18.89 | 0.491 | 38.47 |
| 207 | 405 | 19.01 | 0.190 | 100.05 |
| 209 | 409 | 19.38 | 0.067 | 289.25 |
| 212 | 413 | 24.02 | 0.061 | 393.77 |
| 213 | 414 | 19.12 | 0.078 | 245.13 |
| 227 | 440 | 19.54 | 0.048 | 407.08 |
| 241 | 468 | 19.50 | 0.021 | 928.57 |

These results show that the nitrogen trifluoride concentration was only slightly influenced by the nickel filled reactor while the dinitrogen difluoride concentration was substantially affected and a reduced level of 0.02% was attained. Even though the $NF_3$ concentration varied the ratio of $\%NF_3/\%N_2F_2$ increased substantially with the ratio increasing at a faster rate at temperatures above 204°C (400°F).

## Example 2

The procedure of Example 1 was repeated except that the process gas used for purification was formulated from cylinder gas. The composition of the process gas was:

| Air | $\%CH_4$ | $\%N_2O$ | $\%N_2F_2$ | $\%NF_3$ |
|---|---|---|---|---|
| 1.14 | 0.06 | Trace | 1.044 | 97.81 |

The cylinder gas was passed through the two-inch, schedule 40 nickel pipe filled with 50—50

4

mixture of nickel balls and nickel protuded packing at a flow rate of 0.5 standard cubic feet per hour (scfh). At this flow rate the residence time of the gas while in contact with the nickel packing in the reactor was about 335 seconds. The temperature in the reactor was maintained between 343°C—371°C (650—700°F). The off gas from the reactor was analysed by gas chromatography and the analysis was as follows:

| | Air | $\%CH_4$ | $\%N_2O$ | $\%N_2F_2$ | $\%NF_3$ |
|---|---|---|---|---|---|
| Off-Gas Analysis | 3.29 | 0.054 | Trace | Not Detected | 96.66 |

On comparing the off-gas analysis to the process gas analysis, the results clearly show the elimination of dinitrogen difluoride from the gas mixture. Although the nitrogen trifluoride was reduced in substantially the same quantity, e.g. about 1.2% by volume, the 1.2% loss becomes insignificant because of the high concentration of nitrogen trifluoride present. As was shown in the Example 1, where the percent nitrogen trifluoride is present in a much lower quantity, the percent loss to decomposition or defluorination was insignificant. Analysis of the nickel balls after treatment of the gas indicated the presence of nickel fluoride. Thus it would appear the nickel balls would have to be replaced after some length of time in order to effect decomposition of the dinitrogen difluoride.

Stability tests showed that $NF_3$ was relatively stable at temperatures up to 593°C (1100°F) with only about 2% decomposing at that temperature.

### Example 3 (Comparative Example)

The procedure of Example 1 was repeated except that a synthetic zeolite 5A molecular sieve was substituted for the nickel balls and packing. At a temperature of about 93°C—104°C (200—220°F), the nitrogen trifluoride decomposed appreciably. At 149°C (300°F) 40% of the nitrogen trifluoride decomposed with high levels, i.e. 4—14% nitric oxide being observed in the off-gas.

When petroleum coke was substituted for the molecular sieve, decomposition of nitrogen trifluoride was less. However, the petroleum coke was ineffective for removing dinitrogen difluoride.

### Example 4

The procedure of Example 1 was repeated except that the process gas used for purification was formulated from cylinders and had an analysis of 98.4% $NF_3$, 0.54% $N_2F_2$ and 0.98% air ($N_2/O_2$). The packing used was a 1.6 mm (1/16 inch) to 3.3 mm (1/8 inch) screen of Monel (Registered Trade Mark) metal mesh wire rolled into a cylinder. The results were:

| T°C | °F | % Air | $\%NF_3$ | $\%N_2F_2$ | Ratio $NF_3/N_2F_2$ |
|---|---|---|---|---|---|
| 16 | 59 | 1.5 | 97.93 | 0.55 | 178 |
| 54 | 130 | 0.98 | 98.4 | 0.60 | 164 |
| 82 | 180 | 1.0 | 98.34 | 0.64 | 154 |
| 100 | 212 | 1.35 | 98.32 | 0.31 | 317 |
| 178 | 351 | 1.75 | 98.20 | 0.05 | 1964 |
| 215 | 418 | 1.84 | 98.14 | .01 | 9814 |
| 242 | 469 | 1.80 | 98.18 | .01 | 9818 |
| 268 | 515 | 1.84 | 98.13 | 0.01 | 9813 |
| 107 | 227 | 1.05 | 98.50 | 0.43 | 229 |

The results show the Monel steel is effective for reducing the $N_2F_2$ content without appreciably reducing the $NF_3$ content when defluorinating at a temperature of from 177°C—238°C (350°F—460°F).

5

## Example 5
The procedure of Example 4 was repeated except that a stainless steel 304 screen was employed. The results were:

| T°C | °F | % Air | $\%NF_3$ | $\%N_2F_2$ | Ratio $NF_3/N_2F_2$ |
|---|---|---|---|---|---|
| 9 | 48 | 1.04 | 98.29 | 0.65 | 151 |
| 64 | 145 | 0.99 | 98.36 | 0.63 | 156 |
| 123 | 254 | 1.01 | 98.30 | 0.67 | 147 |
| 134 | 272 | 1.40 | 98.53 | 0.05 | 1971 |
| 189 | 374 | 1.73 | 98.20 | 0.04 | 2455 |
| 214 | 412 | 1.70 | 98.26 | 0.02 | 4913 |
| 234 | 452 | 1.79 | 98.19 | .01 | 9819 |
| 279 | 536 | 1.67 | 98.3 | .01 | 9830 |
| 131 | 266 | 1.20 | 98.38 | 0.40 | 246 |

The results show defluorination of $N_2F_2$ to proceed at about 132°C (270°F) with good results at the 227°C (450°F) and 277°C (530°F) level.

## Example 6
The procedure of Example 2 was repeated except that low carbon steel washers having a thickness of about 0.8 mm (1/32 inch) and a diameter of 12.7 mm (1/2 inch) were used as the packing. The results of the difluorination studies were:

| T°C | °F | % Air | $\%NF_3$ | $\%N_2F_2$ | Ratio $NF_3/N_2F_2$ |
|---|---|---|---|---|---|
| 33 | 92 | 1.20 | 98.18 | 0.60 | 164 |
| 93 | 200 | 0.96 | 98.37 | 0.65 | 151 |
| 125 | 254 | 0.99 | 98.31 | 0.68 | 145 |
| 154 | 310 | 1.07 | 98.36 | 0.55 | 179 |
| 182 | 359 | 1.85 | 98.08 | 0.05 | 1962 |
| 208 | 407 | 1.63 | 98.12 | 0.23 | 427 |
| 224 | 433 | 1.82 | 98.04 | 0.12 | 817 |
| 267 | 511 | 1.72 | 98.15 | 0.11 | 892 |

These results show that low carbon steel washers were effective for reducing the $N_2F_2$ content, but not as effective as nickel in Example 1 or the Monel metal or stainless steel as in Examples 4 and 5.

## Example 7
The procedure of Example 2 was repeated except that aluminium chips were used as the packing. The chips were, when viewed in plan, square having sides of about 6.4 mm by 6.4 mm (1/4 by 1/4 inch). The results were:

| T°C | °F | % Air | %NF$_3$ | %N$_2$F$_2$ | Ratio NF$_3$/N$_2$F$_2$ |
|---|---|---|---|---|---|
| 26 | 80 | 1.13 | 98.24 | 0.61 | 161 |
| 104 | 219 | 0.98 | 98.37 | 0.63 | 156 |
| 127 | 260 | 1.12 | 98.17 | 0.69 | 142 |
| 164 | 328 | 1.1 | 98.36 | 0.52 | 189 |
| 193 | 380 | 1.8 | 98.14 | 0.04 | 2454 |
| 218 | 422 | 1.7 | 98.28 | .01 | 9828 |
| 247 | 476 | 1.8 | 98.18 | .01 | 9818 |
| 273 | 524 | 1.75 | 98.19 | 0.04 | 2455 |
| 151 | 303 | 1.5 | 98.34 | 0.14 | 702 |

### Example 8

The procedure of Example 7 was repeated except that 3.2 mm (1/8 inch) O.D. copper tubes 6.4 mm (1/4 inch) long were used as the packing. The results were:

| T°C | °F | % Air | %NF$_3$ | %N$_2$F$_2$ | Ratio NF$_3$/N$_2$F$_2$ |
|---|---|---|---|---|---|
| 13 | 56 | 1.3 | 98.02 | 0.66 | 149 |
| 69 | 158 | 1.1 | 98.16 | 0.72 | 136 |
| 126 | 259 | 1.0 | 98.30 | 0.68 | 145 |
| 108 | 226 | 1.3 | 97.95 | 0.73 | 134 |
| 152 | 308 | 1.7 | 98.20 | 0.01 | 9828 |
| 190 | 374 | 1.8 | 98.14 | 0.04 | 2454 |
| 206 | 403 | 1.7 | 98.25 | 0.035 | 2807 |
| 229 | 446 | 4.3 | 91.40 | 0.02 | 4570 |
| 275 | 528 | 1.8 | 98.16 | 0.02 | 2908 |
| 108 | 224 | 1.3 | 97.0 | 0.46 | 211 |

Again, the results show effectiveness of N$_2$F$_2$ reduction at about 149°C (300°F) with good results being obtained at the 260°C (500°F) level.

### Claims

1. A process for removing dinitrogen difluoride from at atmosphere containing nitrogen trifluoride wherein the dinitrogen difluoride is present in an amount not exceeding 5% by volume, which process is characterized in that it comprises bringing said atmosphere into contact with a metal capable of defluorinating said dinitrogen difluoride but inert (as herein defined) to said nitrogen trifluoride and maintaining said metal and said atmosphere in contact at a sufficient temperature and for a sufficient reaction time to effect at least partial defluorination of said dinitrogen difluoride.

2. A process according to Claim 1, characterized in that said temperature is maintained between 149°C (300°F) and 538°C (1000°F).

3. A process according to Claim 2, characterized in that said temperature is maintained between 204°C (400°F) and 371°C (700°F).

4. A process according to Claim 1, 2 or 3, characterized in that said reaction time is between 1 and 1,000 seconds.

5. A process according to Claim 4, characterized in that said reaction time is between 3 and 10 seconds.

6. A process according to any preceding Claim, characterized in that said metal is selected from the group consisting of nickel, cobalt and iron.

7. A process according to any preceding Claim, characterized in that said metal comprises perforate strips.

8. A process according to any preceding Claim, characterized in that said metal comprises thin rectangular strips which, when viewed in plan, have sides not less than 0.4 mm (1/64 inch) and not greater than 51 mm (2 inches) long.

9. A process according to any preceding Claim, characterized in that said nitrogen trifluoride is present in said atmosphere in an amount greater than 15% by volume and the percent dinitrogen difluoride is less than 2%.

10. A process according to any preceding Claim, characterized in that said metal comprises spheres having a diameter between 3.2 mm (1/8 inch) and 12.7 mm (1/2 inch).

**Patentansprüche**

1. Verfahren zur Entfernung von Distickstoffdifluorid aus einer stickstofftrifluoridhaltigen Atmosphäre, in der das Stickstofftrifluorid in einer Menge von höchstens 5 Vol.-% vorliegt, dadurch gekennzeichnet, daß diese Atmosphäre mit einem Metall in Berührung gebracht wird, das in der Lage ist, das Distickstoffdifluorid zu defluorieren, jedoch gegenüber dem Stickstofftrifluorid inert is (wie hierin definiert) und das Metall und diese Atmosphäre bei einer ausreichenden Temperatur und während einer ausreichenden Reaktionszeit miteinander in Berührung stehen, um wenigstens eine teilweise Defluorierung des Distickstoffdifluorids zu erreichen.

2. Verfahren nach Anspruch 1, dadurch gekennzeichnet, daß die Temperatur auf 149°C (300° Fahrenheit) bis 538°C (1000° Fahrenheit) gehalten wird.

3. Verfahren nach Anspruch 2, dadurch gekennzeichnet, daß diese Temperatur auf 204°C (400° Fahrenheit) bis 371°C (700° Fahrenheit) gehalten wird.

4. Verfahren nach Anspruch 1, 2 oder 3, dadurch gekennzeichnet, daß die Reaktionszeit 1 bis 1000 s beträgt.

5. Verfahren nach Anspruch 4, dadurch gekennzeichnet, daß die Reaktionszeit 3 bis 10 s beträgt.

6. Verfahren nach einem der vorstehenden Ansprüche, dadurch gekennzeichnet, daß das Metall aus einer Gruppe ausgewählt wird, die aus Nickel, Kobalt und Eisen besteht.

7. Verfahren nach einem der vorstehenden Ansprüche, dadurch gekennzeichnet, daß das Metall aus perforierten Streifen besteht.

8. Verfahren nach einem der vorstehenden Ansprüche, dadurch gekennzeichnet, daß das Metall aus dünnen rechteckigen Streifen besteht, die im Grundriß eine Seitenlänge von mindestens 0,4 mm (1/64 inch) und höchstens 51 mm (2 inch) aufweisen.

9. Verfahren nach einem der vorstehenden Ansprüche, dadurch gekennzeichnet, daß das Stickstofftrifluorid in dieser Atmosphäre in einer Menge von mehr als 15 Vol.-% vorliegt und der Distickstoffdifluoridgehalt weniger als 2% beträgt.

10. Verfahren nach einem der vorstehenden Ansprüche, dadurch gekennzeichnet, daß das Metall aus Kugeln besteht, die einen Durchmesser zwischen 3,2 mm (1/8 inch) und 12,7 mm (1/2 inch) aufweisen.

**Revendications**

1. Procédé d'élimination de difluorure diazoté à partir d'une atmosphère contenant du trifluorure d'azote dans lequel le difluorure diazoté est présent en quantité ne dépassant pas 5% en volume, lequel procédé est caractérisé en ce qu'il comprend la mise en contact de ladite atmosphère avec un métal capable d'effectuer la défluoration du difluorure diazoté, mais inerte vis-à-vis du trifluorure d'azote et le maintien dudit métal et de ladite atmosphère en contact à une température suffisante et pendant un temps de réaction suffisant pour effectuer au moins une défluoration partielle du difluorure diazoté.

2. Procédé selon la revendication 1, caractérisé en ce que ladite température est maintenue entre 149°C (300°F) et 538°C (1 000°F).

3. Procédé selon la revendication 2, caractérisé en ce que ladite température est maintenue entre 204°C (400°F) et 371°C (700°F).

4. Procédé selon l'une quelconque des revendications 1, 2 ou 3, caractérisé en ce que le temps de réaction est entre 1 et 1 000 secondes.

5. Procédé selon la revendication 4, caractérisé en ce que le temps de réaction est entre 3 et 10 secondes.

6. Procédé selon l'une quelconque des revendications précédentes, caractérisé en ce que ledit métal est choisi dans le groupe constitué de nickel, de cobalt et de fer.

7. Procédé selon l'une quelconque des revendications précédentes, caractérisé en ce que ledit métal comprend des bandes perforées.

8. Procédé selon l'une quelconque des revendications précédentes, caractérisé en ce que ledit métal comprend des bandes rectangulaires minces, lesquelles, lorsqu'elles sont vues en plan, ont des côtés dont la longueur n'est pas inférieure à 0,4 mm (1/64 inch.) et n'est pas supérieure à 51 mm (2 inch.).

9. Procédé selon l'une quelconque des revendications précédentes, caractérisé en ce que le trifluorure d'azote est présent dans ladite atmosphère en quantité ne dépassent pas 15% en volume, et le pourcentage en difluorure diazoté est inférieur à 2%.

10. Procédé selon l'une quelconque des revendications précédentes, caractérisé en ce que le métal comprend des sphères présentant un diamètre entre 3,2 mm (1/8 inch.) et 12,7 mm (1/2 inch.).